# EUROPÄISCHE PATENTSCHRIFT

(11) **EP 1 852 339 B1**
(45) Veröffentlichungstag und Bekanntmachung des Hinweises auf die Patenterteilung: **08.07.2009**
(21) Anmeldenummer: 07006934.9
(22) Anmeldetag: 03.04.2007
(51) Int. Cl.: B62D 65/18

(54) **Motortransportadapter**
Adapter for an engine tranporting device
Adaptateur pour transporteur de moteur

(30) Priorität: 03.05.2006 DE 102006020324
(43) Veröffentlichungstag der Anmeldung: 07.11.2007
(73) Patentinhaber: Bayerische Motoren Werke Aktiengesellschaft, 80809 München (DE)
(72) Erfinder: Dzubiel, Claus, 85402 Thalhausen (DE)

(56) Entgegenhaltungen:
- DE-U1-7202004 014 87
- GB-A- 2 313 591
- JP-A- 2005 212 057

## Beschreibung

Die vorliegende Erfindung betrifft einen Motortransportadapter mit einem Aufnahmeflansch zur lösbaren Anordnung an einem, an einem Transportmittel einer Fördereinerichtung angeordneten Spanndorn und einen den Aufnahmeflansch tragenden Hauptkörper mit einer mit Durchgangsöffnungen versehenen Aufnahmefläche, an der ein Motor mittels die Durchgangsöffnungen durchsetzender Schraubbolzen lösbar festlegbar ist. Ein solcher Adapter ist aus der DE 20 2004 014 877 U1 bekannt.

Ein gattungsgemäßer Motortransportadapter, der zum Transport einer Brennkraftmaschine eingesetzt werden kann, wird beispielsweise dazu verwendet, eine teilweise oder auch bereits fertig montierte Brennkraftmaschine von einer Arbeitstation zu einer nächsten Arbeitsstation zu transportieren oder auch zu einer Prüfstation, an der die Brennkraftmaschine einem Kaltlauftest unterzogen wird oder auch zu einem Prüfstand, an der die Brennkraftmaschine einem befeuerten Prüfstandslauf unterzogen wird.

Der Motortransportadapter soll daher zur Aufnahme einer Vielzahl von Brennkraftmaschinen ausgebildet sein und einfach mit einer Fördereinrichtung in der Form beispielsweise eines Kettenförderers verbunden werden können.

Anhand der DE 102 43 475 A1 ist eine Einrichtung zur Montage von Geräten, vorzugsweise Brennkraftmaschinen bekannt geworden. Diese besitzt ein Montageband, an dem Aufnahmewagen angebracht werden können, die wiederum der Aufnahme der Brennkraftmaschinen dienen. Der Aufnahmewagen besitzt dabei eine Grundplatte, die von einem Friktionsrollenband bewegt werden kann. Wie nun die Brennkraftmaschine an dem Aufnahmewagen angeordnet wird, ist anhand dieser Druckschrift nicht näher ersichtlich.

Es ist auch bereits bekannt geworden, Motoren bzw. Brennkraftmaschinen beispielsweise vom Motorenbau zum Karosseriebau mittels eines Aufnahmerahmens zu transportieren, der ein sogenanntes Nesting besitzt, in dem die Brennkraftmaschine über die Ölwanne bzw. die die Ölwanne am Kurbelgehäuse der Brennkraftmaschine abstützende Unterseite des Kurbelgehäuses abgestützt wird. Diese Schilderung macht es deutlich, dass dieses Nesting spezifisch für die Brennkraftmaschine ausgebildet sein muss und somit zum Transport unterschiedlicher Brennkraftmaschinen unterschiedliche Nestings bereitgehalten werden müssen, was den Bevorratungsaufwand an solchen Transportvorrichtungen deutlich erhöht.

Darüber hinaus ist auch bereits ein auf die Anmelderin zurückgehender Motortransportadapter bekannt geworden, der vollständig aus einem metallischen Werkstoff, insbesondere Grauguss mit Kugelgraphit gefertigt ist und somit eine hohe Eigenmasse besitzt. Zudem bringt ein solcher, aus einem metallischen Werkstoff gefertigter Motortransportadapter das Problem der Kontaktkorrosion mit sich. Wird nämlich an einem solchen bekannten Motortransportadapter über eine an dem Kurbelgehäuse der Brennkraftmaschine vorgesehene Anbindungsfläche eine Brennkraftmaschine befestigt, deren Kurbelgehäuse unter Verwendung von Magnesium gefertigt worden ist, so stellt sich bereits nach kurzer Zeit in Verbindung mit Feuchtigkeit aus beispielsweise der Luftfeuchtigkeit ein Kontaktkorrosionsproblem der eingesetzten Magnesiumlegierung ein.

Der vorliegenden Erfindung liegt nun zur Beseitigung dieser geschilderten Nachteile die Aufgabe zugrunde, einen Motortransportadapter zu schaffen, der einerseits das Kontaktkorrosionsproblem beseitigt und unter Beibehaltung entsprechender Festigkeitswerte eine geringere Eigenmasse besitzt.

Die Erfindung schafft nun zur Lösung dieser Aufgabe einen Motortransportadapter mit den Merkmalen des Anspruchs 1. Vorteilhafte Ausgestaltungen hiervon sind in den weiteren Ansprüchen beschrieben.

Die Erfindung schafft nun einen Motortransportadapter mit einem Aufnahmeflansch zur lösbaren Anordnung an einem, an einem Transportmittel einer Fördereinrichtung angeordneten Spanndorn und einem den Aufnahmeflansch tragenden Hauptkörper mit einer mit Durchgangsöffnungen versehenen Aufnahmefläche, an der ein Motor mittels die Durchgangsöffnungen durchsetzender Schraubbolzen lösbar festlegbar ist, wobei der Hauptkörper aus einem Kunststoffwerkstoff gebildet ist und mittels einer Anbindungsfläche mit dem aus einem metallischen Werkstoff gebildeten Aufnahmeflansch formschlüssig verbunden ist. Damit wird durch die Bildung des Hauptkörpers aus einem Kunststoffwerkstoff das Kontaktkorrosionsproblem bei der Festlegung der Brennkraftmaschine über die am Kurbelgehäuse der Brennkraftmaschine vorgesehene Anbindungsfläche an der Aufnahmefläche des Hauptkörpers beseitigt und darüber hinaus ein verglichen mit dem bekannten Motortransportadapter deutlich weniger Eigenmasse besitzender Motortransportadapter geschaffen.

Es ist dabei nach der Erfindung vorgesehen, dass der Aufnahmeflansch weitgehend rohrstückförmig ausgebildet ist und sich rechtwinklig zur Längsmittelachse radial nach außen gerichtet erstreckende Rippen besitzt, die von der Anbindungsfläche des Hauptkörpers hintergriffen sind.

Der erfindungsgemäße Motortransportadapter ist daher als Verbundkörper aus Kunststoff- und Metallteilen mit einem beispielsweise durch Spritzgießen oder Extrusion erzeugten Formschluss zwischen der Aufnahmefläche und dem Hauptkörper gebildet und ist daher einerseits so hoch belastbar, dass er die Eigenmasse der Brennkraftmaschine tragen kann, ohne dabei selbst eine hohe Eigenmasse aufzuweisen und kann darüber hinaus vergleichsweise kostengünstig hergestellt werden. Auch besitzt der erfindungsgemäße Motortransportadapter den Vorteil, dass er nach der beispielsweise durch Spritzgießen erfolgenden Verankerung der Anbindungsfläche des Hauptkörpers an dem Aufnahmeflansch keine Nachbearbeitung mehr erfordert. Darüber hinaus besitzt er gegenüber dem aus einem metallischen Werkstoff gebildeten bekannten Motortransportadapter den Vorteil der Korrosionsbeständigkeit und der leichten Rezyklierbarkeit, da bei der Verbindung des Hauptkörpers und des Aufnahmeflansches keine Hilfsstoffe eingesetzt werden sondern die beiden Werkstoffe mittels eines Spritzgießvorganges mechanisch miteinander verankert werden und somit eine leichte Separierbarkeit des Hauptkörpers und des Aufnahmeflansches gegeben ist.

Während des zur Herstellung des erfindungsgemäßen Motortransportadapters beispielsweise eingesetzten Spritzgießvorgangs, bei dem der Aufnahmeflansch in die Form gegeben wird und nach Schließen der Form der Kunststoff zur Bildung des Hauptkörpers in die Form eingespritzt wird und sich somit die Anbindungsfläche an dem Hauptkörper mit den radial nach außen gerichtet erstreckenden Rippen formschlüssig verbindet, findet ein Verankerungsvorgang des Hauptkörpers an dem Aufnahmeflansch statt, der dem so gebildeten Verbundkörper hohe Festigkeitswerte verleiht.

Um nun die vorstehend beschriebene feste Verankerung des Hauptkörpers über eine Anbindungsfläche an dem Aufnahmeflansch sicher zu stellen, ist es nach der vorliegenden Erfindung vorgesehen, dass die Rippen des Aufnahmeflansches in Umfangsrichtung im Abstand mit Zwischenraum zueinander angeordnet sind und jeweils eine vorbestimmte Längserstreckung besitzen, sodass der Kunststoffwerkstoff den Raum zwischen den Rippen ausfüllt, dabei die Rippen vollständig umschließt und somit ein Formschlussverbund zwischen dem Hauptkörper und dem Aufnahmeflansch erreicht wird.

Eine an dem erfindungsgemäßen Motortransportadapter festgelegte Brennkraftmaschine kann nun über den vorstehend bereits beispielhaft geschilderten Kettenförderer bewegt werden, wobei zu diesem Zweck der Motortransportadapter über seinen Aufnahmeflansch an dem Spanndorn des Transportmittels festgelegt wird und zwar derart, dass der Aufnahmeflansch mittels einer Ausnehmung an einem am Spanndorn form- und flächenkomplementär ausgebildeten Vorsprung drehfest festgelegt werden kann.

Nach einer Weiterbildung der Erfindung ist es dabei vorgesehen, dass der Hauptkörper in Druckspannungsrichtung und im Winkel zur Druckspannungsrichtung verlaufende Versteifungsrippen besitzt, der aus dem Kunststoffwerkstoff gebildete Hauptkörper also auf seiner Seite, an der er hauptsächlich Druckspannungen aus der Eigenmasse der Brennkraftmaschine heraus unterworfen wird, in Druckspannungsrichtung und im Winkel zur Druckspannungsrichtung verlaufende Versteifungsrippen besitzt, sodass die von der Brennkraftmaschine bzw. vom Motor her stammenden Massenkräfte und -momente über die Versteifungsrippen abgestützt werden.

Die an dem Motortransportadapter angeordnete Brennkraftmaschine stützt sich über Schraubbolzen an der Aufnahmefläche ab. Die Schraubbolzen durchsetzen an der Aufnahmefläche vorgesehene Durchgangsöffnungen, sodass diese Durchgangsöffnungen den Krafteinleitungsort auf die Aufnahmefläche darstellen. Um nun diesen Gegebenheiten Rechnung zu tragen, ist es nach einer Weiterbildung der Erfindung vorgesehen, dass die Versteifungsrippen von den Durchgangsöffnungen oder einem Bereich benachbart zu den Durchgangsöffnungen ausgehend in Druckspannungsrichtung und im Winkel zur Druckspannungsrichtung verlaufen.

Die Brennkraftmaschine übt auf den Motortransportadapter aufgrund des Abstands ihres Massenmittelpunkts von der Längsmittelachse des Motortransportadapters ein Biegemoment aus, sodass es im Motortransportadapter zu entsprechenden Zugspannungen kommt. Um nun dieser Gegebenheit Rechnung zu tragen, ist es nach einer Weiterbildung der Erfindung vorgesehen, dass der Hauptkörper in Zugspannungsrichtung eine weitgehend ausnehmungsfreie Oberfläche besitzt uns somit die Kerbspannungswirkung aufgrund von Ausnehmungen an der Oberfläche des Motortransportadapters verringert ist.

Nach einer Weiterbildung der Erfindung kann die am Motortransportadapter vorgesehene Aufnahmefläche auch geteilt ausgebildet sein, sodass die von den Teilflächen aufgespannten Ebenen im Abstand zueinander weitgehend parallel zu der Längsmittelachse des Hauptkörpers verlaufen. Hierdurch kann einer Ausgestaltung der Brennkraftmaschine Rechnung getragen werden, deren Anbindungsfläche am Kurbelgehäuse zur Anordnung an der Aufnahmefläche des Motortransportadapters geteilt ausgebildet ist.

Auch ist es nach einer Weiterbildung der Erfindung vorgesehen, dass die von der Aufnahmefläche des Motortransportadapter aufgespannte Ebene im Winkel zur Längsmittelachse des Hauptkörpers verläuft. Hierdurch wird eine schräg gestellte Festlegung der Brennkraftmaschine beispielsweise mittels einer an der Auslassseite der Brennkraftmaschine am Kurbelgehäuse vorgesehenen Anbindungsfläche erreicht, sodass der am Schwerpunkt der Brennkraftmaschine angreifende Kraftvektor aufgrund der Eigenmasse der Brennkraftmaschine in möglichst geringem Abstand zur Längsmittelachse des Motortransportadapters verläuft und somit die Biegemomentbelastung auf den Motortransportadapter verringert wird.

Nach einer Weiterbildung der Erfindung können in den Durchgangsöffnungen der aus einem Kunststoffwerkstoff gefertigten Aufnahmefläche metallische Buchsen eingesetzt werden, an denen die Schraubbolzen über ihren Schraubbolzenkopf anliegen. Diese metallischen Buchsen können beispielsweise aus einem Stahlwerkstoff gefertigt sein. Um nun bei einem mit einer Magnesiumlegierung gefertigten Kurbelgehäuse einer zu transportierenden Brennkraftmaschine das Kontaktkorrosionsproblem zu beseitigen, ist es nach einer Weiterbildung der Erfindung vorgesehen, dass an der Aufnahmefläche im Bereich der Durchgangsöffnungen Auflageflächen aus einem zum Werkstoff des Motors kontaktkorrosionsfreien Werkstoff, insbesondere einer Aluminiumlegierung vorgesehen sind.

Somit erhöhen die aus der Aluminiumlegierung vorgesehen und im Bereich der Durchgangsöffnungen angeordneten Auflageflächen die Belastbarkeit der Auflagefläche des Hauptkörpers aufgrund der zwischen der Anbindungsfläche des Kurbelgehäuses und den Auflageflächen durch das Festziehen der Schraubbolzen entstehenden Flächenpressung und andererseits wird auch den werkstoffseitigen Gegebenheiten des Kurbelgehäuses der Brennkraftmaschine Rechnung getragen.

Der Aufnahmeflansch des Motortransportadapters, mit dem der Motortransportadapter am Spanndorn befestigt wird, kann beispielsweise aus einem Sphäroguss, insbesondere GGG-60 gebildet werden, während der Hauptkörper aus einem glasfaserverstärkten Polyamid 6 gebildet werden kann. Ein geeigneter Werkstoff wird beispielsweise von Bayer Polymers unter der Bezeichnung Duretan® BKV 35 HTS 900050 bereitgestellt oder von der Albis Plastic GmbH unter der Bezeichnung ALLCOM® PA6 900/1 CF10 GF25 IM. Diese Werkstoffe besitzen eine Vicat-Erweichungstemperatur von jeweils über 200° Celsius, sodass diese Temperatur auch bei einem befeuerten Prüfstandslauf der am Motortransportadapter angeordneten Brennkraftmaschine nicht erreicht wird.

Die Erfindung wird im Folgenden anhand der Zeichnung näher erläutert. Diese zeigt in:
Fig. 1 eine Darstellung zur Erläuterung der Funktionsweise des erfindungsgemäßen Motortransportadapters in einer Ansicht von der Seite;
Fig. 2 eine Draufsichtansicht auf einen Motortransportadapter gemäß einer ersten Ausführungsform nach der vorliegenden Erfindung;
Fig. 3 eine Seitenansicht des Motortransportadapters nach Fig. 2;
Fig. 4 eine Expositionsdarstellung des in Fig. 2 bzw. Fig. 3 dargestellten Motortransportadapters;
Fig. 5 eine Draufsichtansicht auf einen Motortransportadapter gemäß einer zweiten Ausführungsform nach der vorliegenden Erfindung;
Fig. 6 eine Seitenansicht des in Fig. 5 dargestellten Motortransportadapters; und
Fig. 7 eine Explosionsdarstellung des in Fig. 5 bzw. Fig. 6 dargestellten Motortransportadapters.

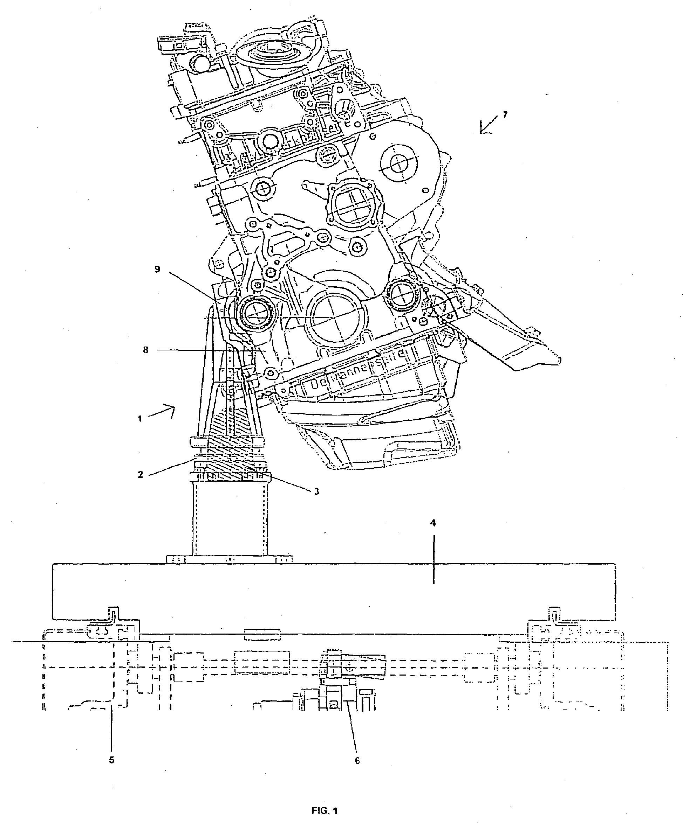

Fig. 1 der Zeichnung zeigt eine Darstellung zur Erläuterung der Funktionsweise eines Motortransportadapters 1 gemäß der vorliegenden Erfindung.

Der Motortransportadapter 1 wird über seinen Aufnahmeflansch 2 an einem Spanndorn 3 drehfest festgelegt, wobei sich der Spanndorn 3 an einem Transportmittel 4 in der Form einer Transportplatte angeordnet befindet, die Teil eines Förderzeugs ist und über einen Kettenförderer 5 beispielsweise aus dem Motorenbau zum Karosseriebau oder zu Kaltlauf- oder Warmlaufprüfstationen befördert werden kann. Das Bezugszeichen 6 bezeichnet einen Antrieb des Kettenförderers. Eine Brennkraftmaschine bzw. ein Motor 7 kann über eine am Kurbelgehäuse 8 des Motors 7 ausgebildete Anbindungsfläche an einer Aufnahmefläche 9 des Motortransportadapters 1 mittels Schraubbolzen lösbar festgelegt werden.

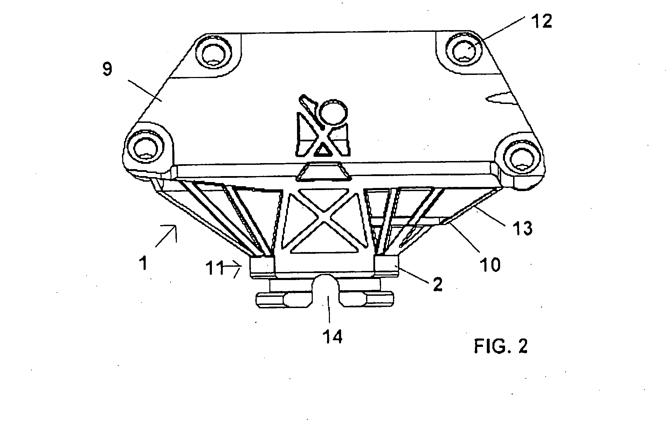

Fig. 2 der Zeichnung zeigt nun eine Draufsichtansicht eines Motortransportadapters 1 gemäß einer ersten Ausführungsform. Der Motortransportadapter 1 besitzt dabei einen Aufnahmeflansch 2, an dem ein Hauptkörper 10 mit einer Anbindungsfläche 11 fest verankert ist, sodass mit dem aus beispielsweise GGG-60 gebildeten Aufnahmeflansch und dem aus Durethan® BKV 35 HTS 900050 gebildeten Hauptkörper 10 ein Verbundkörper aus Metall und einem faserverstärkten Kunststoff gebildet ist.

Der Motortransportadapter 1 besitzt eine Aufnahmefläche 9 mit Durchgangsöffnungen 12, die von nicht näher dargestellten Schraubbolzen durchsetzt werden, die in entsprechende mit einem Innengewinde versehene Bohrungen am Kurbelgehäuse 8 des Motors 7 in Eingriff gebracht werden können. Der Hauptkörper 10 weist in Druckspannungsrichtung und im Winkel zur Druckspannungsrichtung verlaufende Versteifungsrippen 13 auf, die den im Wesentlichen in Druckrichtung belasteten Motortransportadapter 1 gemäß Fig. 2 entsprechende Festigkeitswerte verleihen. Der Aufnahmeflansch 2 besitzt eine Ausnehmung 14, über die er drehfest an einem nicht näher dargestellten Vorsprung des Spanndorns 3 festgelegt werden kann, sodass sich der Motor 7 während seines Transports relativ zur Transportplatte 4 nicht verdrehen kann.

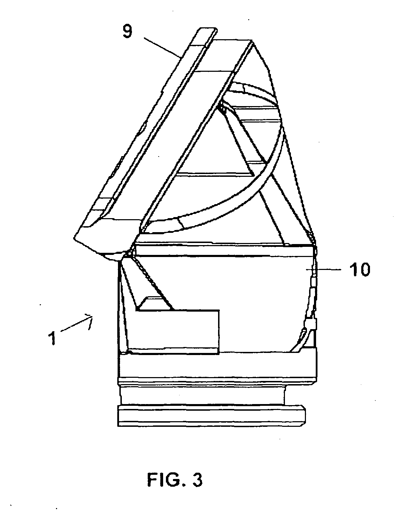

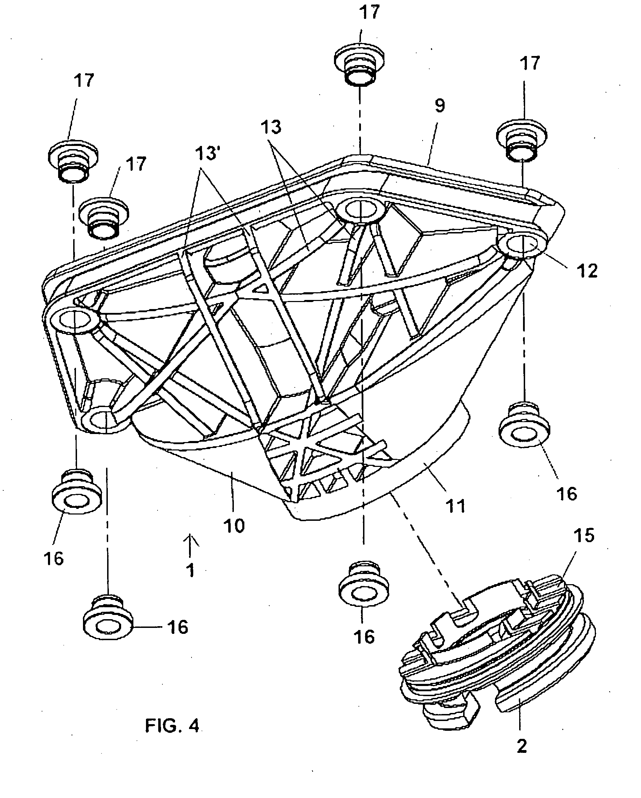

Fig. 3 der Zeichnung nun zeigt eine Seitenansicht des in Fig. 2 dargestellten Motortransportadapters 1. Wie es ohne weiteres ersichtlich ist, ist die Aufnahmefläche 9 im Winkel zu einer Längsmittelachse des Hauptkörpers 10 angeordnet. Damit kann die in Fig. 1 der Zeichnung dargestellte Relativlage des am Motortransportadapter 1 befestigten Motors 7 erreicht werden, sodass aufgrund dieser Relativlage das Eigengewicht des Motors 7 den Motortransportadapter 1 im Wesentlichen auf Druck belastet. Fig. 4 der Zeichnung nun zeigt eine Explosionsdarstellung des in Fig. 2 und 3 der Zeichnung dargestellten Motortransportadapters 1 und eine Rückansicht des Hauptkörpers 10. Der Aufnahmeflansch 2 weist eine weitgehend rohrstückförmige Konfiguration auf und besitzt sich rechtwinkelig zur Längsmittelachse des Aufnahmeflansches 2 radial nach außen gerichtet erstreckende Rippen 15, die in der fest verfügten Konfiguration des Motortransportadapters 1 von der Anbindungsfläche 11 des Hauptkörpers 10 fest umschlossen sind, sodass eine formschlüssige Verankerung zwischen dem Aufnahmeflansch 2 und dem Hauptkörper 10 des Motortransportadapters 1 erreicht wird.

Der Hauptkörper 10 weist an seiner Rückseite von den Durchgangsöffnungen 12 bzw. einem Bereich nahe den Durchgangsöffnungen 12 ausgehende Versteifungsrippen 13 auf. Zudem besitzt er in Druckrichtung verlaufende Versteifungsrippen 13'. In die Durchgangsöffnungen 12 können von der Rückseite des Hauptkörpers 10 her beispielsweise aus einem Stahlwerkstoff gefertigte Buchsen 16 eingesetzt werden und von der Vorderseite der Aufnahmefläche 9 her Buchsen 17 aus beispielsweise einer Aluminiumlegierung, die nicht zur Kontaktkorrosion mit dem beispielsweise eine Magnesiumlegierung enthaltenden Kurbelgehäuse 8 des Motors 7 neigen.

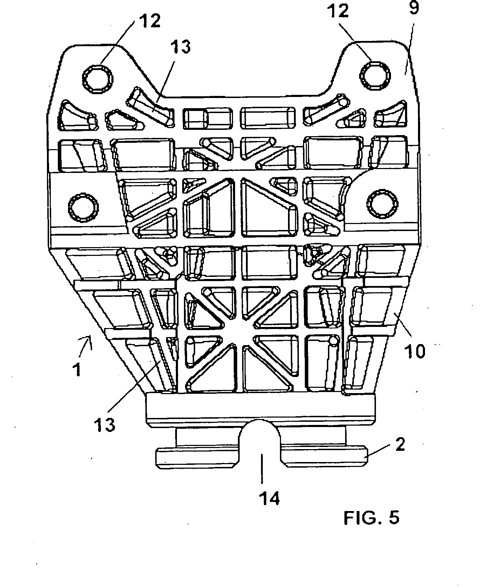

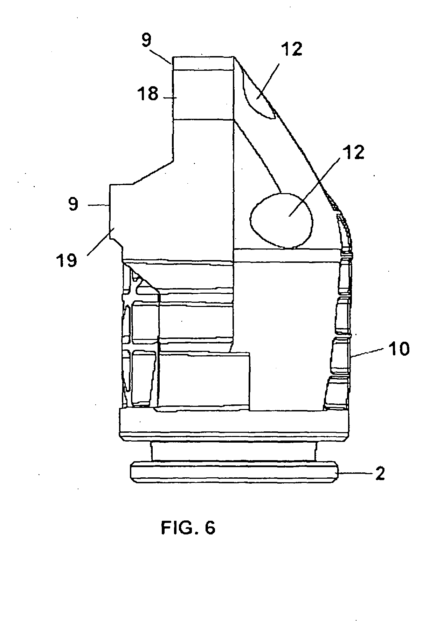

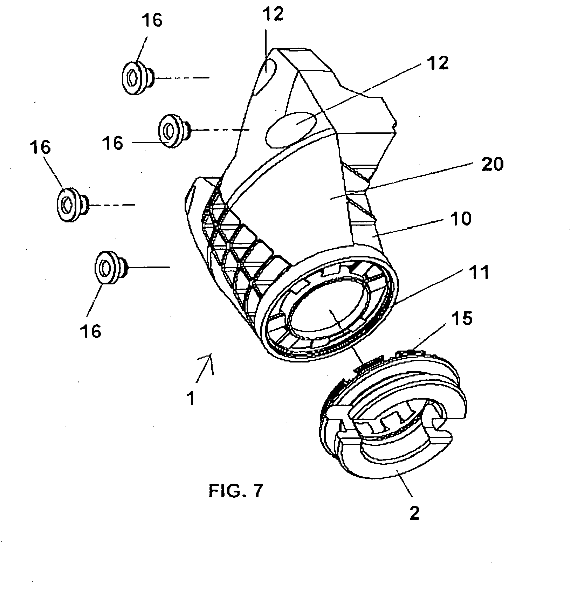

Fig. 5 der Zeichnung zeigt eine Draufsichtansicht von vorne auf einen Motortransportadapter gemäß einer zweiten Ausführungsform nach der vorliegenden Erfindung. Auch dieser Motortransportadapter 1 weist einen Aufnahmeflansch 2 mit einer Ausnehmung 14 auf und besitzt einen Hauptkörper 10 mit Durchgangsöffnungen 12 und einer Vielzahl von Versteifungsrippen 13. Wie es ohne weiteres anhand von Fig. 6 der Zeichnung ersichtlich ist, ist die Aufnahmefläche 9 geteilt ausgebildet, sodass die von Teilflächen 18, 19 aufgespannten Ebenen jeweils im Abstand zueinander verlaufen und weitgehend parallel zu der Längsmittelachse des Hauptkörpers 10. Fig. 7 der Zeichnung zeigt eine Explosionsdarstellung des in Fig. 5 und Fig. 6 dargestellten Motortransportadapters 1 gemäß der zweiten Ausführungsform.

Wie es ohne weiteres ersichtlich ist, besitzt der Aufnahmeflansch 2 wiederum im rechten Winkel zur Längsmittelachse des Aufnahmeflansches 2 radial nach außen gerichtet sich erstreckende Rippen 15, die von der Anbindungsfläche 11 des Hauptkörpers 10 in der montierten Stellung formschlüssig hintergriffen werden, sodass eine hohe Kräfte übertragende Formschlussverbindung zwischen dem Aufnahmeflansch 2 und dem Hauptkörper 10 des Motortransportadapters 1 erreicht wird. Die Rückseite 20 des Hauptkörpers 10 nach Fig. 7 wird aufgrund des am Schwerpunkt der Brennkraftmaschine 7 angreifenden Kraftvektors aufgrund der Eigenmasse der Brennkraftmaschine 7 mit Zugspannungen resultierend aus einem Biegemoment belastet, sodass die Rückseite 20 eine weitgehend ausnehmungsfreie Oberfläche besitzt. In die Durchgangsöffnungen 12 des Hauptkörpers 10 können von der Rückseite her wiederum Buchsen 16 aus beispielsweise einer Stahllegierung eingesetzt werden, die dafür sorgen, dass der Schraubenkopf der Schraubbolzen nicht am Kunststoffwerkstoff des Hauptkörpers 10 aufliegt, sondern an den Buchsen 16.

Der erfindungsgemäße Motortransportadapter sorgt nun dafür, dass gegenüber dem bekannten Motortransportadapter eine deutliche Gewichtsersparnis erreicht wird, eine aufwendige maschinelle Nachbearbeitung des Motortransportadapters nach dessen Fertigung entfällt und zudem das Problem der Kontaktkorrosion zwischen der Aufnahmefläche des Motortransportadapters und dem beispielsweise aus einer Magnesiumlegierung gebildeten Kurbelgehäuse des zu transportierenden Motors vermieden wird.

Hinsichtlich vorstehend im Einzelnen nicht näher erläuterter Merkmale der Erfindung wird im Übrigen ausdrücklich auf Ansprüche und die Zeichnung verwiesen.

### Bezugszeichenliste

- 1: Motortransportadapter
- 2: Aufnahmeflansch
- 3: Spanndorn
- 4: Transportmittel
- 5: Kettenförderer
- 6: Antrieb
- 7: Motor
- 8: Kurbelgehäuse
- 9: Aufnahmefläche
- 10: Hauptkörper
- 11: Anbindungsfläche
- 12: Durchgangsöffnung
- 13: Versteifungsrippen
- 13': Versteifungsrippen
- 14: Ausnehmung
- 15: Rippen
- 16: Buchsen
- 17: Buchsen
- 18: Teilfläche
- 19: Teilfläche
- 20: Rückseite

## Patentansprüche

1. Motortransportadapter (1) mit einem Aufnahmeflansch (2) zur lösbaren Anordnung an einem, an einem Transportmittel (4) einer Fördereinrichtung angeordneten Spanndorn (3) und einem den Aufnahmeflansch (2) tragenden Hauptkörper (10) mit einer mit Durchgangsöffnungen (12) versehenen Aufnahmefläche (9), an der ein Motor (7) mittels die Durchgangsöffnungen (12) durchsetzender Schraubbolzen lösbar festlegbar ist, **dadurch gekennzeichnet, dass** der Hauptkörper (10) aus einem Kunststoffwerkstoff gebildet ist und mittels einer Anbindungsfläche (11) mit dem aus einem metallischen Werkstoff gebildeten Aufnahmeflansch (2) formschlüssig verbunden ist.

2. Motortransportadapter (1) nach Anspruch 1, **dadurch gekennzeichnet, dass** der Aufnahmeflansch (2) weitgehend rohrstückförmig ausgebildet ist und sich rechtwinkelig zur Längsmittelachse radial nach außen gerichtet erstreckende Rippen (15) besitzt, die von der Anbindungsfläche (11) des Hauptkörpers (10) hintergriffen sind.

3. Motortransportadapter (1) nach Anspruch 2, **dadurch gekennzeichnet, dass** die Rippen (15) in Umfangsrichtung im Abstand mit Zwischenraum zueinander angeordnet sind und eine vorbestimmte Längserstreckung in Umfangsrichtung besitzen.

4. Motortransportadapter (1) nach einem der vorstehenden Ansprüche, **dadurch gekennzeichnet, dass** der Aufnahmeflansch (2) eine Ausnehmung (14) besitzt, mittels der er am Spanndorn (3) drehfest festlegbar ist.

5. Motortransportadapter (1) nach einem der vorstehenden Ansprüche, **dadurch gekennzeichnet, dass** der Hauptkörper (10) in Druckspannungsrichtung und im Winkel zur Druckspannungsrichtung verlaufende Versteifungsrippen (13) besitzt.

6. Motortransportadapter (1) nach Anspruch 5, **dadurch gekennzeichnet, dass** die Versteifungsrippen (13) von den Durchgangsöffnungen (12) oder einem Bereich benachbart zu den Durchgangsöffnungen (12) ausgehend in Druckspannungsrichtung und im Winkel zur Druckspannungsrichtung verlaufen.

7. Motortransportadapter (1) nach einem der vorstehenden Ansprüche, **dadurch gekennzeichnet, dass** der Hauptkörper (10) in Zugspannungsrichtung eine weitgehend ausnehmungsfreie Oberfläche besitzt.

8. Motortransportadapter (1) nach einem der vorstehenden Ansprüche, **dadurch gekennzeichnet, dass** die Aufnahmefläche (9) geteilt ausgebildet ist und von den Teilflächen (18, 19) aufgespannte Ebenen im Abstand zueinander weitgehend parallel zu der Längsmittelachse des Hauptkörpers (10) verlaufen.

9. Motortransportadapter (1) nach einem der Ansprüche 1 bis 7, **dadurch gekennzeichnet, dass** die von der Aufnahmefläche (9) aufgespannte Ebene im Winkel zur Längsmittelachse des Hauptkörpers (10) verläuft.

10. Motortransportadapter (1) nach einem der vorstehenden Ansprüche, **dadurch gekennzeichnet, dass** in den Durchgangsöffnungen (12) der Aufnahmefläche (9) metallische Buchsen (16) eingesetzt sind, an denen die Schraubbolzen anliegen.

11. Motortransportadapter (1) nach einem der vorstehenden Ansprüche, **dadurch gekennzeichnet, dass** an der Aufnahmefläche (9) im Bereich der Durchgangsöffnungen (12) Auflageflächen (17) aus einem zum Werkstoff des Motors (7) kontaktkorrosionsfreien Werkstoff, insbesondere einer Aluminiumlegierung vorgesehen sind.

12. Motortransportadapter (1) nach einem der vorstehenden Ansprüche, **dadurch gekennzeichnet, dass** der Aufnahmeflansch (2) aus Sphäroguss, insbesondere GGG-60 gebildet ist.

13. Motortransportadapter (1) nach einem der vorstehenden Ansprüche, **dadurch gekennzeichnet, dass** der Hauptkörper (10) aus glasfaserverstärktem Polyamid 6 gebildet ist.

## Claims

1. An engine transport adapter (1) with a receiving flange (2) for detachable arrangement on a clamping mandrel (3) arranged on a transport means (4) of a conveying device, and with a main body (10) carrying the receiving flange (2) having a receiving face (9) provided with through-openings (12), on which an engine (7) can be detachably fastened by means of screw bolts passing through the through-openings (12), **characterised in that** the main body (10) is formed from a plastics material and is positively connected to the receiving flange (2) formed from a metallic material by means of an attachment face (11).

2. An engine transport adapter (1) according to claim 1, **characterised in that** the receiving flange (2) substantially has the form of a tube section and has ribs (15) which extend in a radially outwardly directed manner at right angles to the longitudinal centre axis, the attachment face (11) of the main body (10) engaging behind said ribs.

3. An engine transport adapter (1) according to claim 2, **characterised in that** the ribs (15) are arranged at a spacing with a gap with respect to one another in the peripheral direction and have a predetermined longitudinal extent in the peripheral direction.

4. An engine transport adapter (1) according to any one of the preceding claims, **characterised in that** the receiving flange (2) has a recess (14) by means of which it can be secured in a rotationally fixed manner on the clamping mandrel (3).

5. An engine transport adapter (1) according to any one of the preceding claims, **characterised in that** the main body (10) has reinforcement ribs (13) extending in the direction of compressive stress and at an angle to the direction of compressive stress.

6. An engine transport adapter (1) according to claim 5, **characterised in that** the reinforcement ribs (13) extend proceeding from the through-openings (12) or a region adjacent to the through-openings (12) in the direction of compressive stress and at an angle to the direction of compressive stress.

7. An engine transport adapter (1) according to any one of the preceding claims, **characterised in that** the main body (10) has a substantially recess-free surface in the direction of tensile stress.

8. An engine transport adapter (1) according to any one of the preceding claims, **characterised in that** the receiving face (9) is divided and planes spanned by the part faces (18, 19) extend at a spacing from one another substantially parallel to the longitudinal centre axis of the main body (10).

9. An engine transport adapter (1) according to any one of claims 1 to 7, **characterised in that** the plane spanned by the receiving face (9) extends at an angle to the longitudinal centre axis of the main body (10).

10. An engine transport adapter (1) according to any one of the preceding claims, **characterised in that** metallic bushings (16), on which the screw bolts rest, are inserted in the through-openings (12) of the receiving face (9).

11. An engine transport adapter (1) according to any one of the preceding claims, **characterised in that** support faces (17) made of a material, which is contact corrosion-free with respect to the material of the engine (7), more especially an aluminium alloy, are provided on the receiving face (9) in the region of the through-openings (12).

12. An engine transport adapter (1) according to any one of the preceding claims, **characterised in that** the receiving flange (2) is formed from a spheroidal graphite iron, in particular GGG-60.

13. An engine transport adapter (1) according to any one of the preceding claims, **characterised in that** the main body (10) is formed from a glass fibre-reinforced polyamide 6.

## Revendications

1. Adaptateur de transport de moteur (1) comportant :
- une bride de réception (2) pour être fixée de manière amovible à une broche de serrage (3) portée par un moyen de transport (4) d'une installation de convoyage,
- un corps principal (10) portant la bride de réception (2) et dont la surface de réception (9) est traversée par des orifices (12) auxquels on fixe un moteur (7), de manière amovible, à l'aide de vis qui traversent les orifices (12),
**caractérisé en ce que**
le corps principal (10) est réalisé en une matière plastique et relié par l'intermédiaire d'une surface de liaison (11) à la bride de réception (2) réalisée en un matériau métallique, la liaison étant une liaison par la forme.

2. Adaptateur de transport de moteur (1) selon la revendication 1,
**caractérisé en ce que**
la bride de réception (2) est très largement de forme tubulaire et présente des nervures (15) perpendiculaires à l'axe médian longitudinal qui s'étendent radialement vers l'extérieur, et sont chevauchées par la surface de liaison (11) du corps principal (10).

3. Adaptateur de transport de moteur (1) selon la revendication 2,
**caractérisé en ce que**
les nervures (15) sont réparties dans la direction périphérique avec des écarts formant par des espaces intermédiaires, et leur longueur est pré-définie dans la direction périphérique.

4. Adaptateur de transport de moteur (1) selon les revendications précédentes,
**caractérisé en ce que**
la bride de réception (2) comporte une cavité (14) permettant de la fixer solidairement en rotation à la broche de serrage (3).

5. Adaptateur de transport de moteur (1) selon les revendications précédentes,
**caractérisé en ce que**
le corps principal (10) possède des nervures de rigidification (13) dirigées dans la direction de la contrainte de pression et suivant un certain angle par rapport à celle-ci.

6. Adaptateur de transport de moteur (1) selon la revendication 5,
**caractérisé en ce que**
les nervures de rigidification (13) sont issues des orifices traversants (12) ou d'une zone voisine des orifices traversants (12) en s'étendant dans la direction de la pression et en faisant un angle par rapport à cette direction.

7. Adaptateur de transport de moteur (1) selon les revendications précédentes,
**caractérisé en ce que**
le corps principal (10) possède une surface supérieure pratiquement sans cavité dans la direction des contraintes de traction.

8. Adaptateur de transport de moteur (1) selon les revendications précédentes,
**caractérisé en ce que**
la surface de réception (9) est réalisée de façon divisée et les plans contenant les surfaces partielles (18, 19) sont écartés les uns des autres et pratiquement parallèles à l'axe médian longitudinal du corps principal (10).

9. Adaptateur de transport de moteur (1) selon les revendications 1 à 7,
**caractérisé en ce que**
le plan passant par la surface de réception (9) fait un angle par rapport à l'axe médian longitudinal du corps principal (10).

10. Adaptateur de transport de moteur (1) selon les revendications précédentes,
**caractérisé par**
des manchons métalliques (16) insérés dans les orifices traversants (12) de la surface de réception (9) et contre lesquels s'appuient les vis.

11. Adaptateur de transport de moteur (1) selon les revendications précédentes,
**caractérisé en ce que**
des surfaces d'appui (17) en un matériau résistant à la corrosion par contact avec le matériau du moteur (7), notamment en un alliage d'aluminium sont prévues au niveau de la surface de réception (9) dans la zone des orifices traversants (12).

12. Adaptateur de transport de moteur (1) selon les revendications précédentes,
**caractérisé en ce que**
la bride de réception (2) est en fonte sphérique, notamment en fonte GGG-60.

13. Adaptateur de transport de moteur (1) selon les revendications précédentes,
**caractérisé en ce que**
le corps principal (10) est fabriqué en un polyamide (6) renforcé par des fibres de verre.
